## Europäisches Patentamt

## European Patent Office

## Office européen des brevets

(11) Veröffentlichungsnummer: **0 054 650**
**B1**

(12) **EUROPÄISCHE PATENTSCHRIFT**

(45) Veröffentlichungstag der Patentschrift:
29.01.86

(51) Int. Cl.⁴: **C 01 B 33/107**

(21) Anmeldenummer: 81108342.7

(22) Anmeldetag: 15.10.81

(54) Verfahren zum Reinigen von Chlorsilanen.

(30) Priorität: 24.12.80 DE 3049044

(43) Veröffentlichungstag der Anmeldung:
30.06.82 Patentblatt 82/26

(45) Bekanntmachung des Hinweises auf die Patenterteilung:
29.01.86 Patentblatt 86/5

(84) Benannte Vertragsstaaten:
BE DE FR GB IT NL

(56) Entgegenhaltungen:
EP - A - 0 054 495
DD - A - 135 613
DE - B - 1 289 834
DE - B - 2 546 957
DE - C - 1 134 973
FR - A - 1 245 119
GB - A - 1 028 901

KIRK OTHMER "ENCYCLOPEDIA OF CHEMICAL
TECHNOLOGY" 3rd EDN, Band 20 Seite 885

(73) Patentinhaber: **DYNAMIT NOBEL AKTIENGESELLSCHAFT, Postfach 1209, D-5210 Troisdorf, Bez. Köln (DE)**

(72) Erfinder: **Kötzsch, Hans-Joachim, Dr., Fecampring 28, D-7888 Rheinfelden 1 (DE)**
Erfinder: **Vahlensieck, Hans-Joachim, Dr., Im Habiken 2, D-7867 Wehr (DE)**

## Beschreibung

Gegenstand der vorliegenden Erfindung ist ein Verfahren zum Reinigen von Chlorsilanen, die durch Schwermetall- und/oder Borverbindungen und/oder Hydrogensilane verunreinigt sind. Mit Hilfe des Verfahrens ist es möglich, die Borverbindung aus den Chlorsilanen soweit zu entfernen, dass in dem gereinigten Chlorsilan mit den bekannten analytischen Methoden kein Bor mehr nachweisbar ist und die Gehalte an den übrigen Schwermetall-Verunreinigungen auf Werte von höchstens 10 ppb herabgesenkt werden.

Zur Herstellung von polykristallinem oder monokristallinem Silicium, das für Halbleiterzwecke eingesetzt wird, benötigt man ein extrem reines metallisches Silicium. Die Feinreinigung eines zur Herstellung von Halbleitern einzusetzenden Siliciums erfolgt im allgemeinen durch Zonenschmelzen. Nach diesem Verfahren können aus dem bereits sehr reinen Transistorsilicium nahezu alle in diesem noch in Spuren enthaltenen Elemente entfernt werden.

Zur Entfernung von Bor eignet sich jedoch diese Methode nicht, weil dieses Element sowohl in der Siliciumschmelze als auch in der festen Phase den Verteilungskoeffizienten ungefähr 1 besitzt. Aus diesem Grunde muss besonders grosser Wert darauf gelegt werden, Borverunreinigungen bereits aus der Vorstufe, z.B. dem Trichlorsilan, vor dessen Reduktion zum Transistorsilicium möglichst vollständig zu entfernen. Es sind daher Rest-Bor-Konzentrationen von < 0,1 ppb* in dem Trichlorsilan anzustreben.

$SiCl_4$ in hochreiner Form ist ein begehrter Rohstoff für die Herstellung von optischen Fasern (Lichtwellenleitern). Für diese Verwendung sind die Elemente Fe, Co, Ni, Cu, Cr, V, Mn als Verunreinigung störend, da sie in dem Wellenlängenbereich < 1000 nm absorbieren und damit eine Dämpfung der übertragenen Lichtenergie verursachen und die Lichtübertragungsleistung in unerwünschter Weise bis zur Unbrauchbarkeit beeinträchtigen. Darüber hinaus stören Hydrogenchlorsilane bereits in geringsten Konzentrationen, z.B. ppm**-Mengen, weil sie bei der oxidativen Überführung des $SiCl_4$ in das $SiO_2$ nach den üblichen Verfahren zu einer hartnäckigen Retention von Hydroxylgruppen im $SiO_2$ Anlass geben. Dies hat zur Folge, dass die Lichtübertragungsqualität der Fasern dadurch im Bereich von > 900 nm gegebenenfalls wesentlich herabgesetzt wird. Für Lichtleitfasern, die für die Nachrichtenübermittlung in diesem Wellenlängenbereich technische Verwendung finden sollen, ist es unerlässlich, dass die vorstehend beschriebenen Störfaktoren ausgeschaltet werden.

Die destillative Reinigung von Chlorsilanen alleine ergibt keine befriedigenden Ergebnisse. Es sind deshalb auch schon mehrere chemische Reinigungsmethoden versucht worden, störende Metallionen zu beseitigen. So wurden beispielsweise schon Verfahren beschrieben, bei denen die hohe Reaktionsfähigkeit von Borverbindungen mit organischen funktionellen Gruppen genutzt wird, indem man borhaltigen Chlorsilanen kleine Mengen organischer Stoffe als Komplexbildner hinzufügt, wie beispielsweise Mannit oder andere Zuckeralkohole, Ketone, Aminoverbindungen und andere mehr. Diese Methoden zeigten gegen Borverunreinigungen zwar gewisse Wirkungen, führten aber zu neuen Problemen mit Kohlenstoffverunreinigungen, was einen erheblichen Nachteil bedeutet.

Es wurde daher auch schon vorgeschlagen, in borhaltige Chlorsilane Feuchtigkeitsspuren enthaltende Inertgase z.B. Argon oder Wasserstoff einzublasen (DD-A-135 613). Diese Verfahrensweise verursacht jedoch grosse Schwierigkeiten durch hartnäckige Verkieselungen insbesondere an der Zuführungsstelle, und neben Produktverlusten wegen des hohen Partialdrucks von z.B. Trichlorsilan Probleme wegen der störenden Neutralgasbelastung von Produktkühlern und Destillationskolonnen.

Bei dem in der DE-A-2 546 957 beschriebenen Verfahren zur Reinigung von Chlorsilanen erfolgt die Reinigung mit Hilfe wasserhaltiger Oxide oder Silikate. Dabei reagiert das freie Wasser mit den Borverbindungen und zusätzlich mit den Chlorsilanen, wobei die gleichen Nachteile auftreten wie bei dem Verfahren der DD-A-135 613.

Andererseits wurde auch schon versucht, die erforderliche Reinigung mit stickstoffhaltigen organischen Komplexbildnern, z.B. mit Hilfe von Dithizon oder Nitroanisol sowie mit primäre, sekundäre oder tertiäre Aminogruppen enthaltenden Polymeren auszuführen (US-A-3 682 594). Alle diese Adsorptionsverfahren scheiden aber aus teils wegen zu geringer Reinigungskapazität (z.B. Kieselgele) teils ebenfalls wegen Eintrags von Kohlenstoff (z.B. bei Anwendung von Ionenaustauschern oder Nylon) in das Silicium.

Nach diesen Verfahrensweisen lassen sich die Metallgehalte zwar in dem erwünschten Ausmass reduzieren, wobei die Behandlung mit Adsorptionsmitteln und Komplexbildnern einen erheblichen Aufwand erfordert; für die Beseitigung von Hydrogenchlorsilanen eignen sich die vorstehend beschriebenen Behandlungsmethoden jedoch nicht.

Es bestand deshalb die Aufgabe, ein Verfahren zu finden, mit dessen Hilfe es möglich ist, Metallverbindungen und Hydrogensilane aus Chlorsilanen möglichst quantitativ zu entfernen, das einfach zu handhaben ist und keine zusätzlichen apparativen Aufwendungen mit sich bringt und auch keine zusätzlichen Stoffe in das Chlorsilan einschleppt. Das erhaltene Chlorsilan soll dabei einen Gehalt an Bor besitzen, der < 0,1 ppb Bor ist. Da diese geringen Mengen analytisch nicht mehr erfassbar sind, gilt für den Gehalt an Bor die Bedingung, dass ein aus dem Chlorsilan hergestelltes decompensiertes «electronic-grade»-Silicium einen Widerstand von 9000 $\Omega \cdot$ cm oder mehr besitzen soll.

---

\* ppb = parts per billion
\*\* ppm = parts per million

Weiterhin soll das erhaltene Chlorsilan einen Gehalt an Schwermetallionen besitzen, der unter 10 ppb liegt. Bei der Reinigung von $SiCl_4$ soll weiterhin der Gehalt an Hydrogensilanen unter 1 ppm liegen.

In Erfüllung dieser Aufgabe wurde nun ein Verfahren zur Reinigung von Chlorsilanen von den in diesen als Verunreinigung enthaltenen Metallverbindungen und Hydrogensilanen gefunden, das durch die in den Ansprüchen 1 und 2 angegebenen Massnahmen gekennzeichnet ist.

Mit Hilfe der erfindungsgemässen Arbeitsweise ist es möglich, ein Chlorsilan zu erhalten, in dem durch keine noch so feine bekannte analytische Methode Bor im Silan nachgewiesen werden kann. Sowohl mit Hilfe colorimetrischer als auch spektroskopischer Methoden konnte kein Bor nachgewiesen werden. Der für die Beurteilung der Halbleiterqualität ausschlaggebende Widerstand von aus solchen erfindungsgemäss gereinigtem Silan hergestellten und im Zonenschmelzverfahren gereinigtem Transistorsilicium liegt bei mindestens 9000 $\Omega \cdot cm$.

Wenn nach der erfindungsgemässen Verfahrensweise $SiCl_4$ gereinigt wird, dann enthält dieses überraschenderweise kein $SiHCl_3$ mehr. Das Trichlorsilan reagiert unter den erfindungsgemässen Bedingungen mit dem Siloxan und verbleibt bei der anschliessenden Destillation in oligomerer oder polymerer Form im Sumpf. Man erhält demzufolge ein Tetrachlorsilan, aus dem sich optische Fasern der geforderten hohen Qualität herstellen lassen.

Die erfindungsgemässe Verfahrensweise zeichnet sich durch eine äusserst einfache Handhabung aus: Es genügt, die erfindungsgemäss einzusetzenden Komponenten in das Chlorsilan auf an sich bekannte Weise einzubringen und dafür zu sorgen, dass eine homogene Verteilung der Verbindungen im Chlorsilan stattfindet. Die Reaktion der Borverbindungen mit den zuzusetzenden Verbindungen erfolgt bereits bei Raumtemperatur, so dass ein Erhitzen nicht notwendig ist. Das entstehende borhaltige Reaktionsprodukt ist in den Chlorsilanen innerhalb der anfallenden Konzentrationen löslich und nicht flüchtig. Es lässt sich demzufolge leicht durch Destillation der Chlorsilane von diesen abtrennen, wobei es im Sumpf verbleibt.

Die Menge der Verbindungen mit mindestens einer Si–O–Si-Gruppierungen liegt zwischen 0,005 und 0,1 Gew.-%, bezogen auf das Chlorsilan. Bei grösseren Mengen an Verunreinigungen muss eine entsprechend grössere Menge an Si–O–Si-Gruppierungen enthaltenden Verbindungen eingesetzt werden.

Die Reaktion der Metallverbindungen mit den erfindungsgemässen Zusätzen erfolgt nur in Gegenwart von Halogenwasserstoff. Der bevorzugte Halogenwasserstoff ist Chlorwasserstoff. Dieser wird entweder zusammen mit den Si–O–Si-Gruppierungen enthaltenden Verbindungen zudosiert oder er liegt bereits gelöst in dem Chlorsilan vor. Die notwendige Menge an Halogenwasserstoff liegt in der gleichen Grössenordnung wie die Menge an Si–O–Si-Gruppierungen.

Zu den Verbindungen mit Si–O–Si-Gruppierungen zählen hauptsächlich Tetrachlordisiloxan und dessen höhere Homologe wie z.B. Hexachlordisiloxan, Hexachlortrisiloxan oder Octachlortrisiloxan oder Gemische solcher Verbindungen. Es können jedoch auch andere Siloxane, die frei von Organogruppen sind und bei Raumtemperatur flüssig oder fest sind, erfindungsgemäss eingesetzt werden.

Weiterhin eignen sich erfindungsgemäss auch solche Verbindungen, die ein Si—O-Flächen- oder Raumgitter besitzen, wie z.B. Silicoameisensäureanhydrid oder auch $SiO_2$. Letzteres kann sowohl in hochdisperser Form, der sogenannten pyrogenen Kieselsäure, als auch in der gröberen Form der Kieselgele eingesetzt werden.

Der Einsatz von $SiO_2$ in Form von Kieselgel, wie es in der Säulenchromatographie verwendet wird, ermöglicht eine besondere Durchführungsform des erfindungsgemässen Verfahrens: Man lässt das verunreinigte Chlorsilan, das geringe Mengen Chlorwasserstoff enthält, eine Kieselgel-Säule durchlaufen. Dabei verbleiben die Verunreinigungen in der Säule, so dass man ein Eluat erhält, in dem sich z.B. kein Bor mehr analytisch nachweisen lässt. Anhand dieser Durchführungsform lässt sich auch beweisen, dass bei der erfindungsgemässen Reinigung die Anwesenheit von Halogenwasserstoff notwendig ist: Wenn dabei z.B. das Trichlorsilan keine Salzsäure gelöst enthält, dann ist das Eluat weiterhin durch Borverbindungen verunreinigt, die sich durch fraktionierte Destillation nicht abtrennen lassen.

Es ist erfindungsgemäss weiterhin möglich, die zum Reinigen einsetzbaren Siloxane in situ aus den Chlorsilanen zu erzeugen, so dass nicht die Siloxane hinzugefügt zu werden brauchen, sondern nur solche Substanzen, die mit dem Chlorsilan unter Bildung von Chlorsiloxanen, und gegebenenfalls von Chlorwasserstoff, reagieren. Als Beispiel für eine solche Substanz sei Salzsäure in konzentrierter oder verdünnter Form genannt, wobei eine etwa 10%ige Salzsäure durchaus noch einsetzbar ist. Der Einsatz von Salzsäure hat den Vorteil, dass mit deren Zusatz gleichzeitig auch eine für die Reaktion mit den Metallverbindungen nötige Menge an Halogenwasserstoff mit zugeführt wird.

Die dem Chlorsilan zuzusetzende Menge der Verbindung, die die Siloxane in situ erzeugt, liegt in der gleichen Grössenordnung wie die Menge der Siloxane, die hinzugesetzt werden, unter der Voraussetzung, dass der Gehalt an Verunreinigungen in dem Chlorsilan zwischen 1 und 50 ppm liegt. Bei einer grösseren Konzentration an zu entfernenden Verunreinigungen muss eine entsprechend grössere Menge an Salzsäure oder einer entsprechend wirkenden Verbindung eingesetzt werden. Nach dem Zusatz dieser Verbindung erfolgt die Weiterverarbeitung in gleicher Weise wie oben beschrieben. Auch dabei entstehen zwischenzeitlich keine Trübungen in dem Chlorsilan.

Das erfindungsgemässe Verfahren eignet sich sowohl zur Entfernung von borhaltigen Verunreinigungen als auch von Verunreinigungen durch Verbindungen der Elemente Fe, Ce, Ni, Cn, Cr, Vanadin und Mangan in Trichlorsilan und Tetrachlorsilan.

Beispiel 1

In einem 4 l-Mehrhalskolben, der an einem Tubus mit einer Durchstechkappe verschlossen ist, und der ausserdem ausgerüstet ist mit Bodenventil, Rührer und $N_2$-überdecktem Rückflusskühler wurden 5000 g eines typischen Trichlorsilan-Rohproduktes, bestehend aus 58,4% Trichlorsilan, 41,6% Tetrachlorsilan und etwa 200 ppm Chlorwasserstoff mit einem Borgehalt von 5,7 ppm vorgelegt. Unter Rühren bei Raumtemperatur wurden durch die Durchstechkappe mit Hilfe einer Injektionsspritze 2 ml Hexachlordisiloxan innerhalb 3 bis 4 sec unter die Flüssigkeitsoberfläche des Chlorsilangemischs eingespritzt. Das injizierte Hexachlordisiloxan verteilte sich sofort gleichmässig ohne Trübung in den Chlorsilanen.

Der Ansatz wurde noch 30 min ohne Erwärmen nachgerührt und anschliessend wurden die Chlorsilane fraktioniert abdestilliert. Im verbleibenden Rückstand von etwa 500 g $SiCl_4$ wurden etwa 57 ppm Bor nachgewiesen.

Durch Destillation wurden etwa 2,7 kg Trichlorsilan und ca. 1,6 kg Tetrachlorsilan neben etwa 200 g Zwischenfraktion (Gemisch aus H $SiCl_3$ und $SiCl_4$) gewonnen. Aus dem Trichlorsilan wurde ein Siliciumstab in an sich bekannter Weise hergestellt. Er wies nach siebenmaligem Zonenschmelzen im Vakuum einen Widerstand von 12 200 $\Omega \cdot$ cm auf.

Beispiel 2

In der im Beispiel 1 beschriebenen Apparatur wurden 5000 g des dort genannten Trichlorsilan-Rohproduktes vorgelegt. In dieses Produkt wurden 2 ml einer Suspension von 0,4 g Silicoameisensäureanhydrid in Tetrachlorsilan unter Rühren zugesetzt. Diese Suspension löste sich in dem Chlorsilangemisch bei Normaltemperatur langsam auf. Es bestand eine feine Dispersion, die innerhalb kurzer Zeit klar wurde.

Der Ansatz wurde weiterhin noch 1 Stunde ohne Erwärmen gerührt und anschliessend analog Beispiel 1 durch Destillation aufgearbeitet.

Es wurden ca. 2,8 g Trichlorsilan und ca. 1,5 kg Tetrachlorsilan neben etwa 200 g Zwischenfraktion (H $SiCl_3$/$SiCl_4$-Gemisch) gewonnen. Im Rückstand von ca. 500 g $SiCl_4$ wurden 54 ppm Bor bestimmt. Sowohl im Trichlorsilandestillat, als auch im Tetrachlorsilandestillat und in den 200 g Zwischenfraktion liess sich spektrometrisch kein Bor mehr nachweisen.

Beispiel 3

Es wurde analog Beispiel 2 gearbeitet mit dem Unterschied, dass dem Chlorsilangemisch 0,5 g pyrogene Kieselsäure hinzugefügt wurde. Die Kieselsäure verteilte sich innerhalb kurzer Zeit über den gesamten Reaktionsbehälter. Es blieb während der Gesamtbehandlungsdauer eine geringe Trübung an $SiO_2$ in den Chlorsilanen. Die Aufarbeitung erfolgte analog Beispiel 2.

Im Destillationsrückstand verblieb eine spärliche Ausfällung von $SiO_2$ mit einem Gehalt von 3860 ppm Bor. In dem flüssigen Destillationsrückstand wurden noch etwa 50 ppm Bor gemessen. In allen Destillaten liess sich kein Bor mehr spektralanalytisch nachweisen.

Beispiel 4

In dem im Beispiel 1 genannten Mehrhalskolben wurden 5000 g Trichlorsilan vorgelegt. Das Trichlorsilan hatte einen Borgehalt von 24,6 ppm. Unter Rühren wurde bei Raumtemperatur durch die Durchstechkappe mit Hilfe einer Injektionsspritze mit langer Nadel 1 ml 20%ige wässrige Salzsäure innerhalb von 2 bis 3 sec unter die Flüssigkeitsoberfläche des Trichlorsilans eingespritzt. Die injizierte Salzsäure verschwand dabei ohne von aussen wahrnehmbare Anzeichen einer Reaktion und das im Kolben vorhandene Produkt trübte sich nicht, sondern blieb klar. Das Trichlorsilan wurde anschliessend noch etwa 10 min ohne Erwärmen nachgerührt.

Das auf diese Weise vorbehandelte Trichlorsilan wurde daraufhin über das Bodenventil in die Blase einer Kolonne mit ca. 35 Böden abgelassen und das gesamte Material in einer Fraktion (4650 g Ausbeute) bei 31 °C überdestilliert. Die Blase enthielt darauf nur noch das hold-up der Kolonne von etwa 250 ml mit einem Borgehalt von > 300 ppm.

Das Destillat wurde in gleichmässigen Zeitabständen sowohl colorimetrisch als auch spektroskopisch auf Bor untersucht. Die Erfassungsgrenze dieser Untersuchung wurde im Blindversuch mit < 0,1 ppb bzw. < 50 Nanogramm ermittelt. Über die gesamte Destillationsdauer hinweg wurde im Destillat kein Bor gefunden. Aus dem erhaltenen Trichlorsilan wurden in an sich bekannter Weise Siliciumstäbe gefertigt und durch Zonenschmelzen weiter gereinigt. Die Messung des Widerstands dieser erhaltenen Si-Stäbe ergab Werte zwischen 9 200 und 10 700 $\Omega \cdot$ cm.

Beispiel 5

Analog Beispiel 1 wurden in 5000 g eines typischen Trichlorsilan-Rohprodukts, bestehend aus 92,6% Trichlorsilan, 7,4% Tetrachlorsilan und ca. 400 ppm Dichlorsilan mit einem Borgehalt von 1,92 ppm 0,4 ml konzentrierter wässriger Salzsäure eingespritzt, wobei sich die Salzsäure sofort trübungsfrei löste. Der Ansatz wurde 30 min ohne Erwärmen nachgerührt und anschliessend das gesamte Trichlorsilan (ca. 4600 g) überdestilliert. Nach Ende der Destillation hatte der überwiegend aus Tetrachlorsilan bestehende restliche Blaseninhalt von ca. 300 ml einen Borgehalt von 18 ppm.

Im Trichlorsilandestillat wurden sowohl colorimetrisch als auch spektroskopisch regelmässig für Bor nur noch Blindwerte gefunden. Die Messung des Widerstands an daraus hergestellten Si-Stäben ergab Werte zwischen 9700 und 11 800 $\Omega \cdot$ cm.

Beispiel 6

Über eine chromatographische Säule aus Glas (Durchmesser 50 mm, Füllhöhe 1150 mm), gefüllt mit Kieselgel (Porendurchmesser ca. 10 mm, Korngrösse ca. 50–200 μm, ASTM ca. 60 bis 250 mesh) wurden bei ca. 20°C in flüssigem Aggregatzustand mit der Fliessgeschwindigkeit von 2,2 Liter/h 300 kg technisches Trichlorsilan geleitet, das 632 ppm Chlorwasserstoff gelöst enthielt. Das eingesetzte Trichlorsilan enthielt ausserdem 12,4 ppm Bor. Nach der Passage war im Trichlorsilan kein Bor mehr nachweisbar.

Aus dem so gereinigten Trichlorsilan hergestellte polykristalline Silicium-Stäbe zeigten Widerstandswerte von > 10 000 Ω · cm.

Beispiele 7 bis 14

Analog Beispiel 6 wurden acht weitere 300 kg-Partien borhaltiges Trichlorsilan mit gelöst enthaltenem Chlorwasserstoff nacheinander über dieselbe im Beispiel 6 bereits verwendete chromatographische SiO$_2$-Säule geleitet. Es wurde ebenfalls in flüssiger Phase gearbeitet:

| Beispiel | HCl-Gehalt ppm | Bor-Gehalt ppm | Fliess-geschw. Liter/h |
|---|---|---|---|
| 7 | 2021 | 22,1 | 2,2 |
| 8 | 478 | 8,4 | 2,2 |
| 9 | 729 | 4,8 | 2,2 |
| 10 | 1402 | 11,2 | 2,2 |
| 11 | 684 | 32,5 | 2,2 |
| 12 | 275 | 8,2 | 2,2 |
| 13 | 1063 | 10,6 | 2,2 |
| 14 | 542 | 5,7 | 2,2 |

Das erhaltene Rein-Trichlorsilan wurde in 30 kg-Partien untersucht und zu Silicium-Stäben reduziert. In keiner der 30 kg-Proben war colorimetrisch noch Bor nachweisbar. Alle Siliciumstäbe zeigten Widerstandswerte von > 10 000 Ω · cm.

Die Reinigungskraft der von Beispiel 6 bis Beispiel 14 benutzten Säule war auch nach Beendigung von Beispiel 14 noch ungeschmälert.

Vergleichsbeispiel

Im Vergleich zu Beispiel 6 wurde im genau analogen Verfahren ein technisches Trichlorsilan mit einem Borgehalt von 7,2 ppm, jedoch frei von Chlorwasserstoff, angewandt. Nach jeweils 120 Minuten wurde das aus der Säule abfliessende Trichlorsilan auf seinen Borgehalt colorimetrisch untersucht:

| Zeit Min. | durchgeflossenes Trichlorsilan kg | Bor-Wert |
|---|---|---|
| 120 | 3,2 | frei von Bor |
| 240 | 6,5 | frei von Bor |
| 360 | 9,8 | 14 ppB |
| 480 | 13,0 | 0,4 ppm |
| 600 | 16,2 | 2,5 ppm |
| 720 | 19,5 | 6,8 ppm |

Ohne Chlorwasserstoff arbeitet demzufolge die Säule bereits nach 6 Stunden nicht mehr einwandfrei und ist nach 10 bis 12 Stunden erschöpft.

Beispiel 15

In einem 4-Liter Rührkolben aus Laborgeräteglas, ausgerüstet mit Stickstoffüberdeckung und Durchstechkappe, wurden 5 kg Tetrachlorsilan vorgelegt. Das Tetrachlorsilan enthielt folgende Verunreinigungen:

| | |
|---|---|
| Kupfer | 22 ppb |
| Nickel | 48 ppb |
| Kobalt | 39 ppb |
| Eisen | 221 ppb |
| Mangan | 18 ppb |
| Chrom | 28 ppb |
| Vanadium | 16 ppb. |

Unter Rühren wurden bei ca. 20°C 4 ml einer 25%igen Lösung von Chlorwasserstoff in Hexachlordisiloxan mit Hilfe einer Injektionsspritze mit langer Nadel durch die Durchstechkappe in die flüssige Phase auf einmal injiziert. Nach dreistündiger Reaktionszeit bei ca. 20°C wurde der Ansatz in die Blase einer Destillationskolonne überführt und nach 10minütiger Entgasung durch Rückflusskochen mit dem Rücklaufverhältnis von 1 ausdestilliert.

Es wurden ca. 5 kg Tetrachlorsilan erhalten mit nachstehender Reinheit:

| | |
|---|---|
| Kupfer | < 6 ppb |
| Nickel | < 9 ppb |
| Kobalt | < 3 ppb |
| Eisen | < 3 ppb |
| Mangan | < 2 ppb |
| Chrom | < 3 ppb |
| Vanadium | < 4 ppb. |

Beispiel 16

Analog Beispiel 15 wurden 5 kg Tetrachlorsilan mit einem Trichlorsilangehalt von 32 ppm und etwa gleichem Gehalt an metallischen Verunreinigungen wie das im vorstehenden Beispiel eingesetzte Material mit 5 ml einer 25%igen wässrigen Salzsäure behandelt. Auf diese Weise wurde ein Tetrachlorsilan mit einem Gehalt von < 1 ppm an Trichlorsilan und jeweils < 10 ppb an Metallverunreinigungen erhalten.

**Patentansprüche**

1. Verfahren zur Reinigung von Chlorsilanen von den in diesen als Verunreinigung enthaltenen Metallverbindungen und Hydrogensilanen, wobei man die Chlorsilane mit einer Kieselgelsäure in innigen Kontakt bringt, dadurch gekennzeichnet, dass man flüssige Chlorsilane bei Temperaturen zwischen 0°C und 30°C die Säule durchlaufen lässt, in Gegenwart von mindestens 0,005 Gew.-%, vorzugsweise von 0,005 bis 0,1 Gew.-% Halogenwasserstoff, bezogen auf Chlorsilan.

2. Verfahren zur Reinigung von Chlorsilanen von den in diesen als Verunreinigung enthaltenen Metallverbindungen und Hydrogensilanen, dadurch gekennzeichnet, dass man bei Temperaturen zwischen 0°C und 30°C die Chlorsilane in flüssiger Phase mit einer Verbindung, die eine oder mehrere Si–O–Si-Bindungen enthält, in Gegenwart von mindestens 0,005 Gew.-%, vorzugsweise von 0,005 bis 0,1 Gew.-% Halogenwasserstoff, bezogen auf das Chlorsilan, in innigen Kontakt bringt und anschliessend das auf diese Weise gereinigte Chlorsilan von den dabei entstandenen nicht-flüchtigen Verbindungen abtrennt, wobei die Menge der Verbindungen mit einer oder mehreren Si–O-Bindungen zwischen 0,005 und 0,1 Gew.-%, bezogen auf das Chlorsilan liegt, bei einer Verunreinigungskonzentration des Chlorsilans unterhalb 50 ppm und vorzugsweise zwischen 1 und 50 ppm.

3. Verfahren gemäss Anspruch 2, dadurch gekennzeichnet, dass als Verbindungen, die Si–O–Si-Gruppierungen enthalten, Tetrachlordisiloxan und/oder dessen höhere Homologen eingesetzt werden.

4. Verfahren gemäss Anspruch 1 oder 2, dadurch gekennzeichnet, dass als eine Verbindung, die Si–O–Si-Gruppierungen enthält, feinverteiltes SiO₂ eingesetzt wird.

5. Verfahren gemäss einem der Ansprüche 2 oder 3, dadurch gekennzeichnet, dass man die Si–O–Si-Gruppierungen enthaltenen Verbindungen in situ durch Versetzen des Chlorsilans mit Salzsäure einer Dichte grösser als 1,050 g/l erzeugt.

## Claims

1. Process for the purification of chlorosilanes from the metal compounds and hydrogen silanes contained in these as impurity, wherein the chlorosilanes are brought into intimate contact with a silica gel column, characterised in that liquid chlorosilanes at temperatures between 0 °C and 30 °C are allowed to pass through the column, in the presence of at least 0.005% by weight, preferably from 0.005 to 0.1% by weight of hydrogen halide, related to the chlorosilane.

2. Process for the purification of chlorosilanes from metal compounds and hydrogen silanes contained in these as impurities, characterised in that, at temperatures between 0 °C and 30 °C, the chlorosilanes are brought in the liquid phase in intimate contact with a compound which contains one or several Si–O–Si bonds, in the presence of at least 0.005% by weight, preferably from 0.005 to 0.1% by weight of hydrogen halide, related to the chlorosilane, and then the chlorosilane purified in this way is separated off from the non-fluid compounds which are present, with the amount of the compounds with one or several Si–O-bonds being between 0.005 and 0.1% by weight related to the chlorosilane, for an impurity concentration of the chlorosilane below 50 ppm and preferably between 1 and 50 ppm.

3. Process according to claim 2, characterised in that tetrachlorodisiloxane and/or higher homologues thereof are employed as the compounds which contain Si–O–Si groupings.

4. Process according to claim 1 or 2, characterised in that finely divided SiO₂ is employed as a compound which contains Si–O–Si groupings.

5. Process according to one of claims 2 or 3, characterised in that the compounds containing Si–O–Si groupings are produced in situ by treatment of the chlorosilane with hydrochloric acid in a density greater than 1.050 g/l.

## Revendications

1. Procédé pour la purification des chlorosilanes des composés de métaux et des hydrogénosilanes contenus comme impuretés dans ces chlorosilanes, procédé selon lequel on met en contact intime les chlorosilanes avec une colonne de gel de silice, caractérisé en ce qu'on fait passer à travers la colonne des chlorosilanes liquides, à des températures comprises entre 0 °C et 30 °C, en présence d'au moins 0,005% en poids, avantageusement de 0,005 à 0,1% en poids, d'halogénure d'hydrogène par rapport au chlorosilane.

2. Procédé pour purifier des chlorosilanes et des composés de métaux et hydrogénosilanes qui y sont contenus à titre d'impuretés, procédé caractérisé en ce qu'on met en contact intime à des températures comprises entre 0 °C et 30 °C les chlorosilanes en phase liquide avec un composé qui contient une ou plusieurs liaisons Si–O–Si, en présence d'au moins 0,005% en poids, avantageusement de 0,005 à 0,1% en poids, d'halogénure d'hydrogène par rapport au chlorosilane, et l'on sépare ensuite le chlorosilane, purifié de cette façon, des composés non volatils obtenus pendant l'opération, la quantité des composés comportant une ou plusieurs liaisons Si–O se situant entre 0,005 et 0,1% en poids par rapport au chlorosilane, pour une concentration des impuretés du chlorosilane inférieure à 50 ppm et de préférence comprise entre 1 et 50 ppm.

3. Procédé selon la revendication 2, caractérisé en ce qu'on utilise, à titre de composé contenant des groupements Si–O–Si, le tétrachlorodisiloxane et/ou ses homologues supérieurs.

4. Procédé selon la revendication 1 ou 2, caractérisé en ce qu'on utilise du SiO₂ finement divisé à titre de composé contenant des groupements Si–O–Si.

5. Procédé selon l'une des revendications 2 ou 3, caractérisé en ce qu'on produit in situ les composés contenant les groupes Si–O–Si, en ajoutant au chlorosilane de l'acide chlorhydrique ayant une masse volumique supérieure à 1,050 g/litre.